# EUROPEAN PATENT APPLICATION

(11) **EP 4 468 190 A1**
(43) Date of publication of application: **27.11.2024**
(21) Application number: 24177766.3
(22) Date of filing: 23.05.2024
(51) Int. Cl.: G06F 30/15, G06F 30/20, G06F 111/20, G06F 113/10

(54) **METHOD FOR PARAMETRIZED MULTI-COMPARTMENT HOUSING MODEL CREATION**

(30) Priority: 23.05.2023 US 202318321837
(71) Applicant: Dassault Systèmes Americas Corp., Waltham, MA 02451 (US)
(72) Inventor: CHO, Young-Chang, Dearborn (US); Kandasamy, Satheesh, Whaltham (US)
(74) Representative: Bandpay & Greuter

(57) **Abstract**

A method (700) configures a housing for an assembly via a simulation of the assembly and housing in a computer assisted drafting environment. The assembly includes compartments for components and at least one opening between two neighboring compartments. Based on received parameters (710), aspects of the assembly and the housing are defined, bounding volumes are created (720) for each housing compartment, and bridgings between compartments (730) are defined. A base shell volume of the housing is calculated (740) using Boolean operations on the bounding volumes, and a topological volume is calculated (750) from the base shell volume. A housing assembly model is determined (760) based on the topological volume.

## Description

### FIELD OF THE INVENTION

The present invention relates to design and manufacturing process automation, and more particularly, is related to automatically adapting a housing based on parameters of the housing contents.

### BACKGROUND OF THE INVENTION

A component housing represents a significant portion of the design effort for a component in a computer assisted design (CAD) environment. A typical housing component design is based on a combination of CAD geometric features defining the interior cavities, interior and exterior shell details, and connection features allowing the component to interact with neighboring (housed and external) components. Feature designs are generally driven by their functional requirements such as component isolation, structural integrity, manufacturing, and assembly. The features often overlap spatially and interact functionally. Therefore, feature parametrization is challenging especially for the degree of variability across multiple design stages. In practice, for example, a concept design model and a detailed design model tend to be created using different tools with independent parametrizations. Such disconnected model data restricts efficiency in performing design iterations across design stages. Further, when the relative positions of the enclosed components and their shell thicknesses require modification, the features depending on the impacted faces and edges can potentially fail. Although some local features can be parameterized robustly, it is not straightforward to reuse such component level designs in different products. Therefore, there is a need in the industry to address the abovementioned shortcomings.

### SUMMARY OF THE INVENTION

Embodiments of the present invention provide a method for parametrized multi-compartment housing model creation. Briefly described, the present invention is directed to a method for configuring a multi-compartment housing model for an assembly in a computer assisted drafting environment. The assembly includes compartments for components and at least one opening between two neighboring compartments. Based on received parameters, aspects of the assembly and the housing are defined, bounding volumes are created for each housing compartment, and bridging between compartments are defined. A base shell volume of the housing is calculated using Boolean operations on the bounding volumes, and a topological volume is calculated from the base shell volume. A housing assembly model is determined based on the topological volume. The multi-compartment housing model adaptably and reliably interfaces parametrized housed and external components.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.
FIG. 1 is a flow chart for a first exemplary embodiment method for implementing an electric drive housing.
FIG. 2 is a schematic diagram illustrating an example implementation of the first exemplary method embodiment of FIG. 1.
FIG. 3 is a schematic diagram illustrating the concepts of an interior volume and an exterior volume of bounding volumes A and B.
FIG. 4 is a schematic diagram illustrating examples of prioritization of Boolean operations for the bounding volumes of FIG. 3.
FIG. 5 is a schematic diagram illustrating two exemplary volumetric transitions across a compartment interface.
FIG. 6 is a schematic diagram illustrating compartment shell volumes integrated into a single base shell volume.
FIG. 7 is a second flowchart of the exemplary embodiment for a method for automating configuration of a housing for an assembly.
FIG. 8 is a schematic diagram illustrating an example of a system for executing functionality of the present invention.

### DETAILED DESCRIPTION

The following definitions are useful for interpreting terms applied to features of the embodiments disclosed herein, and are meant only to define elements within the disclosure.

As used within this disclosure, a "housing," "housing component," or "casing" refers to as a structure enclosing an assembly of interest within a parent assembly in the context of a CAD simulation. The housing may include a plurality of compartments or chambers, where individual compartments house different types of sub-components ("housed components") of the housed assembly, and the compartments may have openings or windows connecting adjacent compartments, for example to allow for physical, optical, acoustic, or electrical interaction between components housed in neighboring compartments.

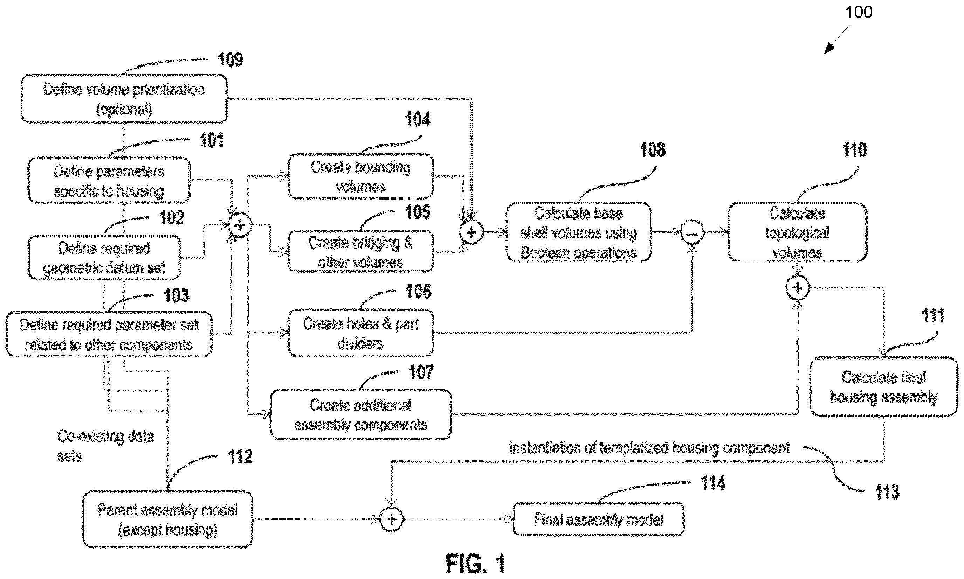

As used within this disclosure, a "component" may refer to one of three component groups: 1. Components composing the housing ("housing components") such as housing body, covers, bolts, etc., 2. Those enclosed by the housing ("housed components"), and 3. Those externally connected to the housing ("external component") such as mounting brackets. The housing generally has its own parameters independent from the other groups (see FIG. 1, block 101). Parameters defining the dimensions of the interface (contacting faces for a pressure fit) to the group 2 and 3 parameters (see FIG. 1, block 103), and the datum set defining the position and orientation of the interfacing features (see FIG. 1, block 102).

As used within this disclosure, a "bounding volume" refers to the defined space (or compartment or chamber) where one or more components of an assembly of interest may be housed. The entire assembly of interest may include a plurality of individual boundary volumes that may be combined (for example, using Boolean operations) to define the overall boundary volume of the assembly of interest.

As used within this disclosure, "base shell volume" refers to the shell volume structure of a defined housing that retains all the major connected and isolated compartments. The definition is primarily based on basic functional features, such as compartment locations, their spatial prioritization, and shell attributes including thickness and curvature. However, a base shell volume does not include openings and windows that are not necessarily defined based on overlapping compartments. For example, the openings for input and output shafts for a gear box are not within the scope.

As used within this disclosure, "topological volume" refers to one of a typically plurality of shell volume parts defining the housing assembly when assembled. The topological volumes correctly represent the openings and windows as well as the disassembling of the housing except auxiliary components, such as fasteners.

As used within this disclosure, "bridging volume" refers to the transition volume needed between two overlapping compartments. Instead of depending on their fundamental boundaries that can lead to non-smooth joints when combined, bridging volume can be used to define a smooth transition from one compartment to another, for example between a pinion and gear pair.

As used within this disclosure, "bridging radius" refers to the radius of a circular boundary that is tangent to the boundaries of two neighboring compartments. The bridging radius can control the shell curvature of the transition section between the compartments.

As used within this disclosure, a "Boolean Operation" refers to a logical combination of two or more bounding volumes, using Boolean operators such as "AND," "OR," XOR," and "NOT." Such Boolean operators may be used to define the intersection and/or union of two or more bounding volumes.

As used within this disclosure, "Parent Assembly" refers to an assembly that includes a plurality of sub-assemblies (or "child assemblies"). For example, changes made to a child assembly may require changes made to the parent assembly to accommodate the changed child assembly. Likewise, changes made to the parent assembly may require changes to be made to one or more child assemblies.

Reference will now be made in detail to embodiments of the present invention, examples of which are illustrated in the accompanying drawings. Wherever possible, the same reference numbers are used in the drawings and the description to refer to the same or like parts.

The housing of a complex engineering product, for example an electric drive housing (typically consisting of electric machine, power electronics and gear reducer components in separate compartments) is often a multi-compartment design, providing functional divisions of interior spaces while retaining the whole components as an integrated unit. The housing design may impact many performance aspects of the system, such as structural integrity and durability, noise and vibration characteristics, and overall efficiency in the case of electric drive unit. It is desirable to execute a parametric study, where a set of independent parameters defining the design is systematically changed in order to assess the impact on performance and/or the manufacturing process. However, as the housing component includes many interacting neighboring parts, conventional CAD practices that adopt hard-coded or rigid constraints are not sufficiently flexible to accommodate parameter changes.

Depending on aspects of the particular housed components (sizing, assembly requirements, among others), the housing component may vary significantly in its shape, which has previously made it difficult to formulate its CAD design, and similarly difficult to avoid having to perform housing modifications in similar models with slight design variations. This problem becomes more challenging when the design modifications are not localized, for example those related to the number, sizing, and/or locations of housed components and how different compartments are connected to each other.

While it has been possible to parametrize a housing CAD model so that desired design changes can be realized by simply modifying the parameters, such parametrization can be quite elaborate depending on model complexity or fidelity, and still may not be easily extendable to different types of housed components, drive units for example. The embodiments described herein are directed to a method for automating changes to a component housing in response to parameter changes of the housed component.

Exemplary embodiments of the present invention receive two types of data sets as input for the creation of a parametrized multi-compartment housing assembly. The first received data set is a set of geometric data embedding the positions and orientations of the housing compartments. This datum set includes axis systems or points located at housing compartment centers or the equivalents. The second received data set includes numeric parameters defining the size and shape of the housing compartments, along with the clearances and thicknesses of the housing shells.

The exemplary embodiments utilize three-dimensional (3D) closed surfaces defining individual compartment interior volumes that may or may not overlap. Another set of three-dimensional closed surfaces defining the exterior volumes overlap with at least one neighboring volume, the combination resulting in a single connected exterior volume. The embodiments utilize Boolean operations in a CAD system to create a multi-thickness shell casing out of the interior and exterior compartment volume sets.

The embodiments consider two types of connections between compartments. The first connection type is a void created by merged multiple overlapping spaces, such as a gear reducer compartment in an electric drive unit, where gear engagement between shafts requires topologically connected inner space. The second connection type is a connection where a dividing wall is needed between two neighboring compartments, for example the electric machine and power electronics compartments in an electric drive unit, where mechanical and electrical isolation is typically required.

In addition to the features of compartment boundaries, the embodiments assume some construction members are functionally important, such as compartment shells, ribs, or stiffeners, and bearing supports in the case of electric drive unit. However, additional features may be added following the same approach.

The embodiments incorporate the concept of a parametric link, an equation involving two or more parameters belonging to different CAD models that are generated automatically when the models are assembled in a parent CAD model. When the housing CAD model is formulated as a template, the model is ready to be part of another CAD model, most likely a parent assembly, where the geometric datum and numeric parameter sets that are the same as the housing CAD are available for a parametric link. Once instantiated, the exemplary embodiments ensure the housing model becomes parametrically consistent in the context of the assembly, meaning the size, location, and orientation of all compartments are consistent with those of the enclosed components or if needed externally connected components. In practical terms, this means the application of the exemplary embodiments results in a housing that automatically adapts to changes in the housed components.

FIG. 1 is a flow chart of a first exemplary method embodiment 100 for producing an electric drive housing for at least one housed component. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

The input 101, 102, 103 includes one or more of a first parameter set 101 specific to the housing model configuration that are independent from the housed components, a second parameter set 102 including a geometric datum set, such as local axis systems referenced by or referencing those of other components (the housed or neighboring components), and a third parameter set 103 of required parameters that are referenced by or referencing those of other components of a parent assembly 112, as described further below. As the second and third sets co-exist in the parent assembly, usually in other components, they are typically parametrically linked at the template instantiation block 113.

The input data sets may be used to create the constructing sub-components, starting from bounding volumes 104 that enclose all the individual housed components, ideally by functional groups. An example of a functional group may be a group of parts for one gear shaft (which may include one shaft, two bearings, and two gears) that may share one bounding volume. A typical CAD tool may create such bounding volumes by revolving a wireframe that is an offset of the planar cut profile of the housed components or by offsetting coalesced abstract shapes that circumscribe the housed components. Additionally, any volumes bridging neighboring bounding volumes may be created 105, then added to calculate the base shell volumes by using Boolean operations 108. The creation of such bridging volumes may be done via a series of typical CAD operations. For example, in the case of bridging the volumes bounding rotating housed components, they may be (1) creating two intersecting curves (circles in this case) from the intersection between the neighboring volumes and a plane, (2) creating a set of spline curves that are tangent to the intersecting curves, (3) joining subset of the mutually split curves into a bridged continuous bounding profile, and then 4. creating the interior and exterior volumes out of the bounding profile. Given the functionality of enclosed components, typically it is not required to change the order of interior volume prioritization from one design to another. However, optionally the Boolean operations may be parametrized based on a volume prioritization input 109 if needed. By creating the holes and other types of cutouts in the bounding volumes as well as flange faces 106 and either subtracting them or splitting the basic casing shell, the bounding volumes can be updated to be the topologically correct sub-components 110. Such operations may be performed in typical CAD tools, for example, by using a Boolean subtraction operation with a cylinder to create a circular cutout or intersecting the shell with planar surfaces to create the disconnections for flange interface, among other techniques. The CAD operation of curve offset, volume extrusion, and hole creation can complete the creation of flange connection supported by fasteners. Other exemplary assembly components may include fasteners, structural stiffeners, part retainers, and auxiliary features, among others, which may be also created 107 and later added to the topological volume definition 110, resulting in the final housing assembly 111. The housing assembly then is instantiated and parametrically linked to the parent assembly, resulting in the final electric drive unit assembly in this case 114.

Once instantiated, the housing assembly may be adjusted to accommodate changes in one or more of the housed components. For example, updating one or more of the linked parameters of two or more components in the CAD system results in the embodiments. receiving the revised linked parameter and re-executing the flow chart of FIG. 1 to produce a revised housing assembly model based on the revised linked parameter.

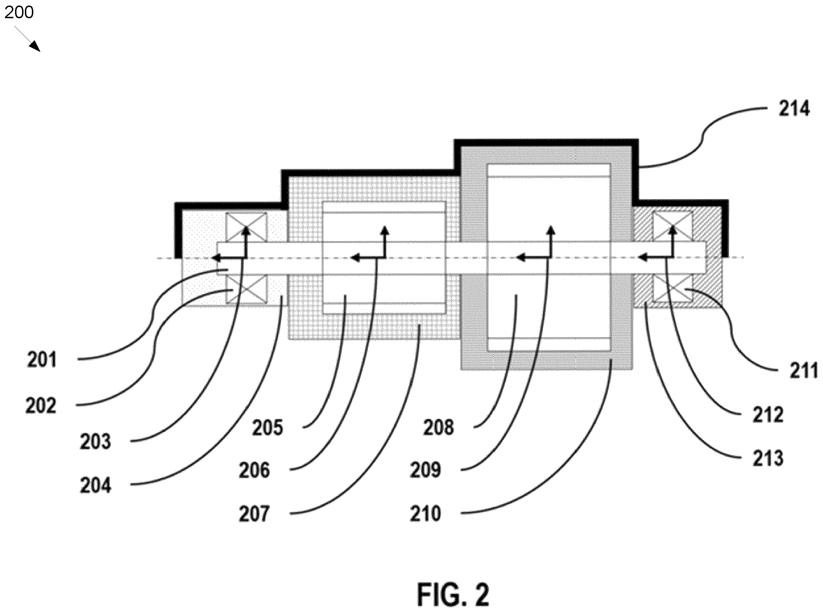

FIG. 2 illustrates an example implementation of the first exemplary method embodiment 100. Here, the creation of a bounding volume is shown in more detail in the context of a gear component group 200. The gear component group 200 includes one shaft 201, a first bearing 203 and a second bearing 211, a first gears 205 and a second gear 208 to be enclosed in a single bounding volume 214.

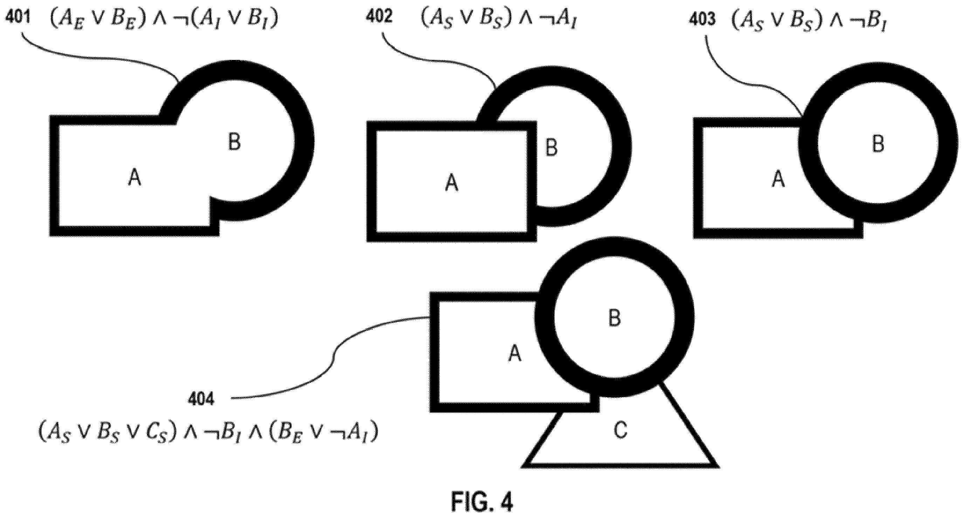

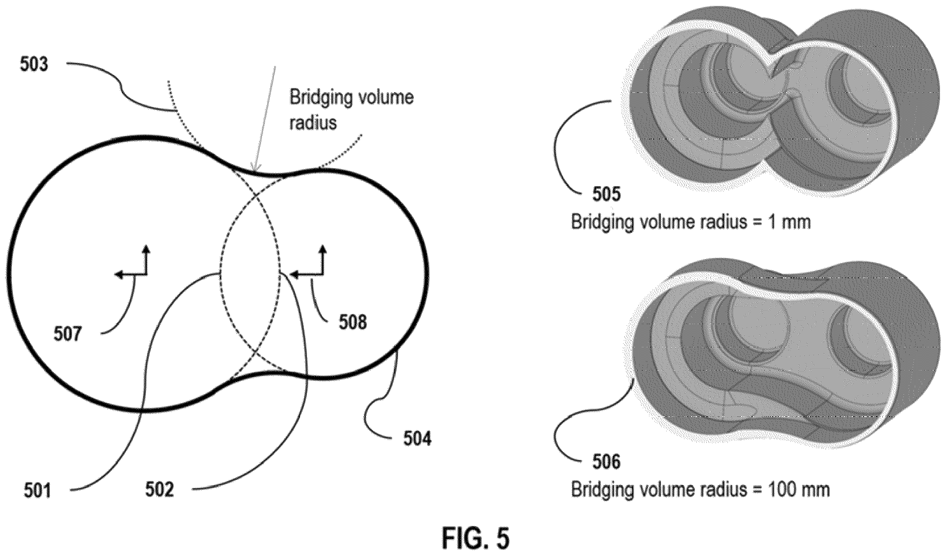

Upon a template instantiation of the components 203, 206, 209, 212, an axis systems references the centers and orientations of the created components 203, 206, 209, 212 and individual bounding volumes 204, 207, 210, 213 containing the respective rotating components 203, 206, 209, 212. Additional parameters may specify any needed case clearances. Here the axis systems of the components 203, 206, 209, 212 correspond to the required geometric datum set 102 (FIG. 1), the diameters and lengths of the gear components 201, 203, 205, 208, 211 correspond to the required parameter set 103, and the additional clearance parameters as well as the shell thickness of individual volumes 204, 207, 210, 213 correspond to the parameters specific to the housing 101. In this example 200, one-to-one correspondence (mapping) for both the required geometric datum set 102 and the required parameter set 103, is required between the gear component case shell 214 and the gear component group 201, 203, 205, 208, 211 or their parent assembly (corresponding to 111). This mapping may be implemented using parametric links between CAD parts. The gear component case shell 214 may be created by a series of Boolean operations 108 (FIG. 1), which is detailed below, between the boundary set of interior volumes and the exterior boundary. In practice, two neighboring compartments may be fully merged as volumes 207 and 208, fully divided by a dividing wall as shown in FIG 4, or partially connected with volumetric transition as shown in FIG 5.

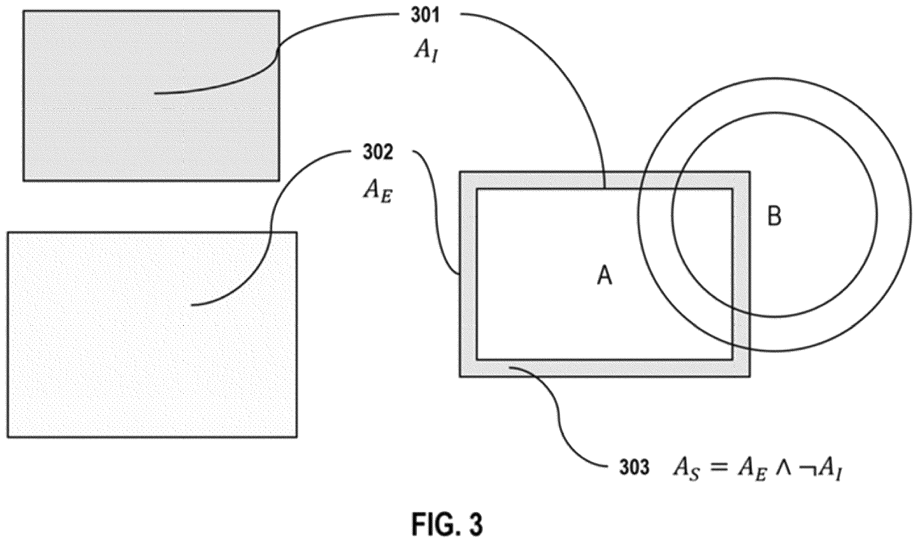

As shown in FIG. 3 for the case of a two-dimensional space, a volume of closed shell with finite thickness wall called shell volume "A" 303 may be created by the Boolean operation of a profile defining its interior surface 301 and another for the exterior 302. Here, the topological operators are ^ for "AND," v for "OR," and ¬ for "NOT." As the shell volumes "A" and "B" intersect, there are three scenarios 401, 402, 403 defining the inner volume(s) exclusively by one of them as shown by FIG. 4:
401. "A" and "B" are equally prioritized: An open interior space within the shells is not specifically within "A" nor "B" shells but shared by them.
402. "A" is prioritized: The space defined by shell "A" is prioritized.
403. "B" is prioritized: The space defined by shell "B" is prioritized.
FIG. 4 also shows a case 404 of three shell volumes "A", "B" and "C" with the prioritization order of B > A > C. The assembly of overlapping shells can be generalized in the same way based on their interior (AI, for example) and exterior (AE, for example) profiles.

Some shell compartments may require additional considerations, for example specific volumetric transition across the compartment interface. This may involve creating bridging volumes and other volumes 105 (FIG. 1). For example, FIG. 5 shows a two gear shaft compartment to incorporate a first bounding volume 501 corresponding to a first rotating component (not shown) and a second bounding volume 502 corresponding to a second rotating component (not shown). Here, gear meshing between the first and second rotating components and appropriate lubrication preferably involves smooth side walls, here defined by a bridging volume 504 in addition to the bounding volumes 501 and 502. Depending on the design intent, the resulting shell may be a first final compartment 505 having a smaller bridging volume radius (here 1 mm) or a second final compartment 506 with a larger bridging radius (here 100 mm). The relative positions of individual compartments may be determined by a required geometric datum set including a first datum set 507 and a second datum set 508 (together corresponding to the required datum set 102 (FIG. 1)), which, for example, coincide with the center locations of center shafts of the first and second rotating components. Likewise, when more than two compartments are connected with volumetric transition, the angular position of intercentral lines are to be sufficiently defined by the required geometric datum set.

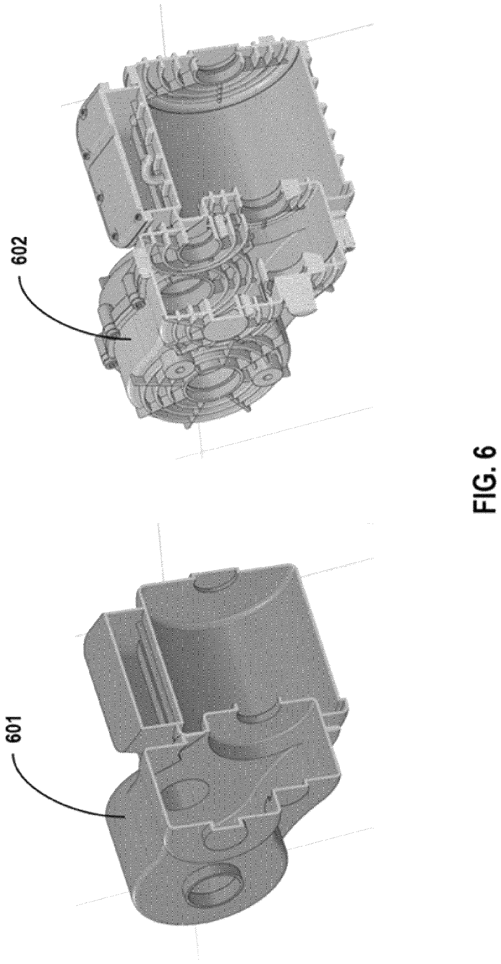

Once the individual compartment shell volumes are properly integrated into a single base shell volume 601 in FIG. 6, additional holes, part splits for flange connections, stiffeners, and fasteners may be incorporated to finalize the housing assembly 602.

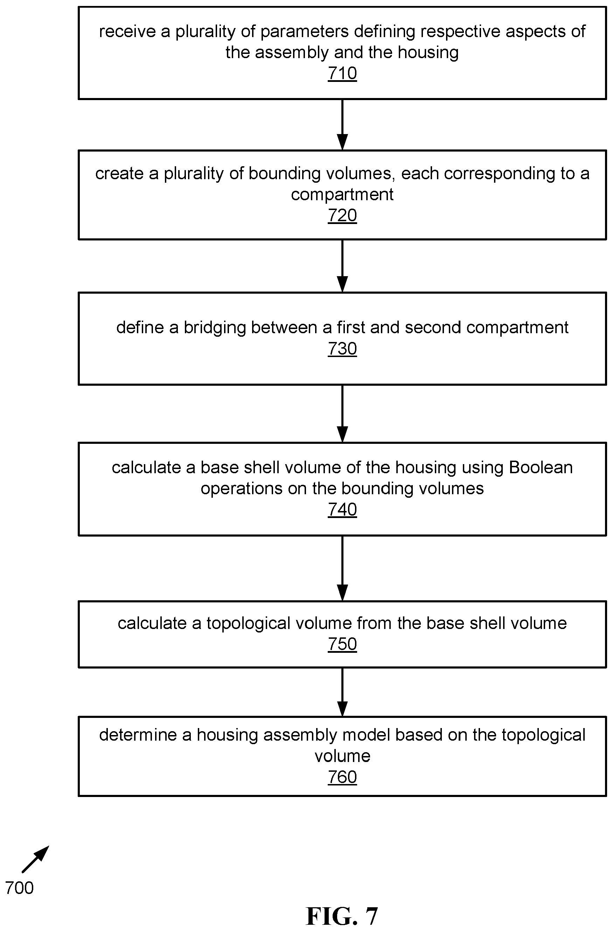

FIG. 7 is a second flowchart 700 of the exemplary embodiment for a method for configuring a housing for an assembly to be manufactured via a simulation of the assembly and housing in a CAD environment, the assembly having a plurality of housed components each having a plurality of compartments configured to house housed components. A plurality of parameters defining respective aspects of the assembly and the housing is received, as shown by block 710. A plurality of bounding volumes, each corresponding to a compartment is created, as shown by block 720. A bridging between a first and second compartment is defined, as shown by block 730. A base shell volume of the housing using Boolean operations on the bounding volumes is calculated, as shown by block 740. A topological volume from the base shell volume is calculated, as shown by block 750. A housing assembly model based on the topological volume is determined, as shown by block 760.

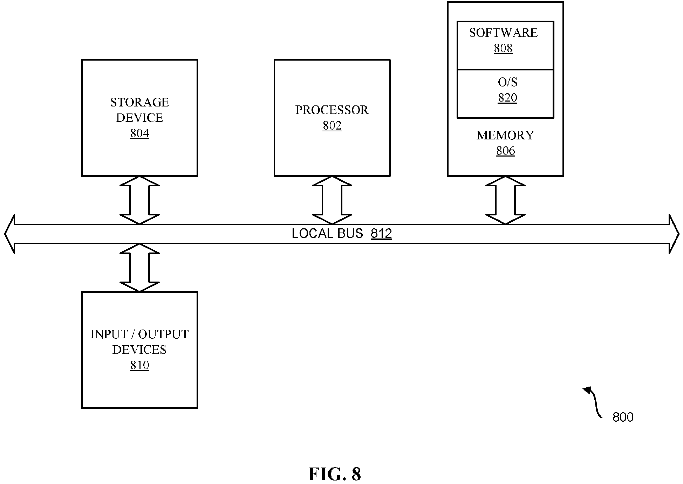

The present system for executing the functionality described in detail above may be a computer, an example of which is shown in the schematic diagram of FIG. 8. In particular, the functionality may be accessed via a CAD environment hosted by the system of FIG. 8. The system 800 contains a processor 802, a storage device 804, a memory 806 having software 808 stored therein that defines the abovementioned functionality, input, and output (I/O) devices 810 (or peripherals), and a local bus, or local interface 812 allowing for communication within the system 800. The local interface 812 can be, for example but not limited to, one or more buses or other wired or wireless connections, as is known in the art. The local interface 812 may have additional elements, which are omitted for simplicity, such as controllers, buffers (caches), drivers, repeaters, and receivers, to enable communications. Further, the local interface 812 may include address, control, and/or data connections to enable appropriate communications among the aforementioned components.

The processor 802 is a hardware device for executing software, particularly that stored in the memory 806. The processor 802 can be any custom made or commercially available single core or multi-core processor, a central processing unit (CPU), an auxiliary processor among several processors associated with the present system 800, a semiconductor based microprocessor (in the form of a microchip or chip set), a macroprocessor, or generally any device for executing software instructions.

The memory 806 can include any one or combination of volatile memory elements (e.g., random access memory (RAM, such as DRAM, SRAM, SDRAM, *etc*.)) and nonvolatile memory elements (*e.g.,* ROM, hard drive, tape, CDROM, *etc*.)*.* Moreover, the memory 806 may incorporate electronic, magnetic, optical, and/or other types of storage media. Note that the memory 806 can have a distributed architecture, where various components are situated remotely from one another, but can be accessed by the processor 802.

The software 808 defines functionality performed by the system 800, in accordance with the present invention. The software 808 in the memory 806 may include one or more separate programs, each of which contains an ordered listing of executable instructions for implementing logical functions of the system 800, as described below. The memory 806 may contain an operating system (O/S) 820. The operating system essentially controls the execution of programs within the system 800 and provides scheduling, input-output control, file and data management, memory management, and communication control and related services.

The I/O devices 810 may include input devices, for example but not limited to, a keyboard, mouse, scanner, microphone, *etc.* Furthermore, the I/O devices 810 may also include output devices, for example but not limited to, a printer, display, *etc.* Finally, the I/O devices 810 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 800 is in operation, the processor 802 is configured to execute the software 808 stored within the memory 806, to communicate data to and from the memory 806, and to generally control operations of the system 800 pursuant to the software 808, as explained above.

When the functionality of the system 800 is in operation, the processor 802 is configured to execute the software 808 stored within the memory 806, to communicate data to and from the memory 806, and to generally control operations of the system 800 pursuant to the software 808. The operating system 820 is read by the processor 802, perhaps buffered within the processor 802, and then executed.

When the system 800 is implemented in software 808, it should be noted that instructions for implementing the system 800 can be stored on any computer-readable medium for use by or in connection with any computer-related device, system, or method. Such a computer-readable medium may, in some embodiments, correspond to either or both the memory 806 or the storage device 804. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 802 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 800 is implemented in hardware, the system 800 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

The embodiments are applicable for creating fully parametrized housing CAD model for any engineering product CAD model consisting of inner component models that share the same set of datum and numeric parameters. The created housing model ensures that its functional and mechanical design integrity in accordance with the neighboring components is achieved automatically regardless of parametric changes, which makes full-scale parametric design study more efficient and practical.

The embodiments improve the ergonomics of the housing design process, reducing knowledge and efforts needed to create a housing CAD model for simulating various ideas and design variants. A fully-parametrized casing model created according to the embodiments may preclude conflicts between component designs leading to sub-optimal design solutions and costly late-stage design changes.

Applications of the exemplary embodiments include design and manufacture of typical aerospace and automotive parts, such as gear boxes and hydraulic connector housings, consumer electronics such as vacuum cleaner and power tools, where relative compartment locations can be optimized for their performance, among others. The housing model may be directly used in the manufacturing process of a real-world housing, for example, as input to a computer controlled milling tool to form the housing.

The embodiments produce a housing model that may be manufactured to produce a real-world housing. For example, the simulation may determine ranges of material properties for the manufactured housing, and further, may provide a list of suitable materials and manufacturing parameters (tolerances, etc.) based on the modeled material properties. For instance, the simulation may be specified to interact with an application programming interface (API) for a computer numerical control (CNC) machine, where the CNC machine manufactures the real-world housing according to the model produced by the exemplary embodiments.

In general, the embodiments produce an output used to alter the design of a real-world housing, for example, to improve the physical characteristics of the real-world housing (smaller, lighter, improved physical interactions (e.g., wind resistance, improved fluid flow characteristics, heat dissipation), to improve the operational characteristics of the real-world housing and/or housed component(s), and/or to improve the manufacturing process of the real-world housing (for example, using fewer materials, less expensive materials, lower energy consumption for the manufacturing process, higher yield rates of the manufacturing process, faster production time for the manufacturing process).

The embodiments described above are applicable to modifications to a real world assembly and real world manufacturing of such assemblies, for example, to reduce the number of iterations to optimize the modified assembly and its manufacture.

It should be noted that in some scenarios it is the responsibility the CAD system user to avoid specifying an input parameter that would result in the increase in size of an individual volume that would violate the constraints of another individual volume and/or the overall assembly volume.

It will be apparent to those skilled in the art that various modifications and variations can be made to the process of the present invention without departing from the scope or spirit of the invention. In view of the foregoing, it is intended that the present invention cover modifications and variations of this invention provided they fall within the scope of the following claims and their equivalents.

## Claims

1. A method for configuring a housing for an assembly to be manufactured via a simulation of the assembly and housing in a computer assisted drafting (CAD) environment, the assembly comprising a plurality of housed components, and the housing comprising a plurality of compartments configured to house the plurality of housed components and at least one opening between two neighboring compartments, comprising the steps of:
- receiving a plurality of parameters defining respective aspects of the assembly and the housing;
- based on the plurality of parameters:
-- creating a plurality of bounding volumes, each bounding volume corresponding to one of the plurality of compartments; and
-- defining a bridging between a first compartment and a second compartment of the plurality of compartments;
- calculating a base shell volume of the housing using Boolean operations on the bounding volumes;
- calculating a topological volume from the base shell volume; and
- determining a housing assembly model based on the topological volume.

2. The method of claim 1, wherein the plurality of parameters comprise at least one of the group consisting of housing component parameters, housed component parameters, and external component parameters.

3. The method of claim 2, further comprising the step of parametrically linking a housing component with a parameter a parent assembly model.

4. The method of claim 3, further comprising the step of combining the final housing assembly model with the parent assembly model.

5. The method of claim 1, further comprising the steps of:
- receiving the final housing assembly model by a computer numerical control (CNC) machine, and
- manufacturing a housing according to the final housing assembly model with the CNC machine.

6. The method of claim 1, further comprising a parametric link between a first parameter of a first component of the plurality of components and a second parameter of a second component of the plurality of components.

7. The method of claim 6, further comprising the steps of;
- receiving a revised first parameter; and
- determining a revised housing assembly model based on the revised first parameter.

8. The method of claim 1, further comprising the step of receiving a prioritization order for the plurality of compartments.

9. The method of claim 4, wherein calculating a base shell volume of the housing using Boolean operations on the bounding volumes is based on the prioritization order.

10. The method of claim 2, wherein the plurality of parameters comprise geometric datum and/or numeric parameter sets, preferably the geometric datum and numeric parameter sets of a housed component or an external component that are the same as a housing component are available for a parametric link.

11. The method of claim 5, further comprising the step of determining a range of a material properties for the manufactured housing, preferably further comprising the step of determining a list of suitable materials and/or manufacturing parameters for the manufactured housing based on the range of material properties.

12. The method of claim 2, further comprising the step of parametrically linking a housing component with a housed component parameter.

13. The method of claim 2, further comprising the step of parametrically linking a housing component with an external component parameter.

14. A computer program comprising instructions which, when the program is executed by a computer, cause the computer to perform the method of any of claims 1 to 13.

15. A system comprising a processor coupled to a memory and a graphical user interface, the memory having recorded thereon the computer program of claim 14.
